# EUROPÄISCHE PATENTSCHRIFT

(11) **EP 3 181 390 B1**
(45) Veröffentlichungstag und Bekanntmachung des Hinweises auf die Patenterteilung: **23.09.2020**
(21) Anmeldenummer: 16200255.4
(22) Anmeldetag: 23.11.2016
(51) Int. Cl.: B60K 5/12, B62D 21/11

(54) **FAHRZEUG MIT EINEM ANTRIEBSAGGREGAT UND EINER AGGREGATELAGERUNG**
VEHICLE WITH A PROPULSION UNIT AND AN ASSEMBLY MOUNT
VÉHICULE AVEC UN GROUPE MOTEUR ET UN PALIER DE GROUPE MOTEUR

(30) Priorität: 17.12.2015 DE 102015016390
(43) Veröffentlichungstag der Anmeldung: 21.06.2017
(73) Patentinhaber: AUDI AG, 85045 Ingolstadt (DE)
(72) Erfinder: Bujak, Marek, 91809 Wellheim (DE); Fischer, Andreas, 85716 Unterschleissheim (DE)

(56) Entgegenhaltungen:
- EP-A2- 1 361 099
- DE-A1-102006 041 094
- FR-A3- 2 980 742
- US-B2- 6 708 793

## Beschreibung

Die Erfindung betrifft ein Fahrzeug mit einer Aggregatelagerung für ein Antriebsaggregat des Fahrzeugs nach dem Oberbegriff des Patentanspruches 1.

Das Antriebsaggregat eines Fahrzeugs, zum Beispiel eine Brennkraftmaschine mit Getriebe oder eine Elektromaschine, ist üblicherweise im Motorraum eines Fahrzeug-Vorderwagens angeordnet und über schwingungsdämpfende Aggregatelager an einer Tragstruktur des Fahrzeugaufbaus gelagert. Die Verbindung zwischen dem Antriebsaggregat und der Fahrzeugaufbau-Tragstruktur wird über Aggregatestützen, das heißt Motor- und/oder Getriebestützen, hergestellt, die über die Aggregatelager an der Tragstruktur des Fahrzeugaufbaus abgestützt sind. Beispielhaft kann das Antriebsaggregat in einer Drei- oder Vierpunktlagerung über vordere und hintere Aggregatelager an einem Hilfsrahmen im Vorderwagenbereich abgestützt sein.

Aus der DE 10 2005 039 312 B3 ist eine Aggregatelagerung bekannt, bei der ein aufbauseitiges Aggregatelager über eine Aggregatestütze das Antriebsaggregat trägt. Die Aggregatestütze weist drei Tragarme auf, die mittels einer Schraubverbindung am Antriebsaggregat verschraubt sind. Die drei Tragarme laufen an einer sockelförmigen Anschraubbasis zusammen, die mit dem Lagerkern eines schwingungsdämpfenden Aggregatelagers verschraubt ist. An jeder der Schraubverbindungsstellen sind das Antriebsaggregat und der jeweilige Tragarm über Planflächen in Anlageverbindung. Die Planflächen sind von Schraublöchern durchsetzt, durch die jeweils ein Schraubbolzen geführt ist, mittels dem der Aggregatestützen-Tragarm mit dem Antriebsaggregat entlang einer Schraubachse (das heißt einer Mittellängsachse des Schraubbolzens) verschraubt ist. Um während des Fahrbetriebs eine wirksame Schwingungstilgung im Aggregatelager zu erzielen, ist eine weitgehend schwingungssteife Anbindung des Antriebsaggregates am Aggregatelager erforderlich. Daher ist die Aggregatestütze mit ihren, sich über große Hebelarmlängen erstreckenden Tragarmen ausreichend materialintensiv auszuführen.

Aus der DE 10 2012 0123 27 A1 ist eine Anordnung einer Elektromotoreneinheit in einem Fahrzeug bekannt. Die Elektromotoreinheit ist über zumindest zwei Aggregateträger an der Karosserie und an einem Achsträger befestigt. Die achsträgerseitigen befestigten Aggregatelager sind über Motorstützen am Aggregat (das heißt der Elektromotoreinheit) angebunden. Die Aggregatelager wirken nach Art einer Pendelstütze. Eines der Aggregatelager ist am Motordeckel/Gehäuse der Elektromotoreinheit befestigt, während das andere Aggregatelager an einem Getriebegehäuse befestigt ist.

Aus der EP 1 361 099 A2 ist ein gattungsgemäßes Fahrzeug bekannt.

Aus der US 6 708 793 B2, der FR 2 980 742 A3 und der DE 10 2006 041094 A1 sind weitere Fahrzeuge mit Aggregateträgern bekannt.

Die Aufgabe der Erfindung besteht darin, ein Fahrzeug mit einer Aggregatelagerung für ein Antriebsaggregat des Fahrzeugs bereitzustellen, bei dem im Vergleich zum obigen Stand der Technik in einfacher Weise sowie insbesondere materialsparend eine schwingungssteife Anbindung des Antriebsaggregates am fahrzeugaufbauseitigen Aggregatelager ermöglicht ist.

Die Erfindung beruht auf dem Sachverhalt, dass im obigen gattungsgemäßen Stand der Technik die Schraubachsen der drei Schraubverbindungsstellen zwischen der Aggregatestütze und dem Antriebsaggregat achsparallel ausgerichtet sind. Eine solche achsparallele Ausrichtung der Schraubachsen kann jedoch nur in eingeschränktem Umfang eine schwingungssteife Antriebsaggregat-Anbindung unterstützen. Vor diesem Hintergrund sind gemäß des Patentanspruches 1 nicht mehr sämtliche Schraubachsen zwischen der Aggregatestütze und dem Antriebsaggregat achsparallel ausgerichtet, sondern sind zumindest zwei, in unterschiedlichen Raumrichtungen orientierte Schraubverbindungsstellen zwischen der Aggregatestütze und dem Antriebsaggregat bereitgestellt. Die Schraubbolzen der Schraubverbindungsstellen sind entlang erster und zweiter Schraubachsen angeordnet, die zueinander unterschiedlich räumlich ausgerichtet sind. Die ersten und zweiten Schraubachsen der verschraubten Schraubbolzen sind um einen Achswinkel rechtwinklig angeordnet.

Die Erfindung ist im Hinblick auf eine einfachere Lesbarkeit mit Bezug auf ein konkretes bevorzugtes Ausführungsbeispiel beschrieben, bei dem die Aggregatestütze in Schraubverbindung mit dem Antriebsaggregat ist. Es versteht sich jedoch, dass die Erfindung nicht auf diese spezielle Befestigungsart beschränkt ist, sondern vielmehr sämtliche anderen Befestigungsarten mitumfassen soll.

Gemäß der Erfindung ist in der ersten Schraubverbindungsstelle die erste Schraubachse des ersten Schraubbolzens in Flucht mit der Fahrzeuglängsrichtung ausgerichtet In der zweiten Schraubverbindungsstelle ist dagegen die zweite Schraubachse des zweiten Fügeelementes in Flucht mit der Fahrzeugquerrichtung ausgerichtet.

In einer technischen Umsetzung kann die Aggregatestütze insgesamt an vier Schraubverbindungsstellen am Antriebsaggregat verschraubt sein. In diesem Fall können im Hinblick auf eine besonders verwindungssteife Anbindung in zwei Schraubverbindungsstellen die Schraubbolzen entlang erster Schraubachsen ausgerichtet sein, während in den beiden anderen Schraubverbindungsstellen die Schraubbolzen entlang der zweiter Schraubachsen ausgerichtet sind.

Im Hinblick auf eine betriebssichere, verwindungssteife Anbindung können in jeder Fügestelle das Antriebsaggregat und die Aggregatestütze über Planflächen zueinander in flächiger Anlagenverbindung sein. Die Planflächen liegen in einer Anbindungsebene, die orthogonal zum Schraubbolzen der jeweiligen Schraubverbindungsstelle angeordnet ist. Bevorzugt sind die Anbindungsebene der ersten Schraubverbindungsstelle und die Anbindungsebene der zweiten Schraubverbindungsstelle zueinander schräggestellt, insbesondere zueinander rechtwinklig angeordnet.

Die Aggregatestütze kann in an sich gängiger Praxis zumindest einen ersten Tragarm und einen zweiten Tragarm aufweisen. Diese laufen an einer lagerseitigen sockelförmigen Anschraubbasis materialeinheitlich und einstückig zusammen, die an das fahrzeugaufbauseitige Aggregatelager anbindbar ist. Das fahrzeugaufbauseitige Aggregatelager kann exemplarisch ein aufbauseitiges Lagerauge aufweisen, in dem ein Lagerkern sowie ein zwischengeschalteter Elastomerkörper angeordnet ist. Der Lagerkern kann mit einer Anschraubbasis der Aggregatestütze verschraubt sein.

Der obige erste Aggregatestützen-Tragarm kann über die erste Schraubverbindungsstelle am Antriebsaggregat angeschraubt sein, während der zweite Aggregatestützen-Tragarm über die zweite Schraubverbindungsstelle am Antriebsaggregat verschraubt ist.

Besonders bevorzugt für eine verwindungssteife Anbindung ist es, wenn der erste Tragarm und der zweite Tragarm der Aggregatestütze einen Inneneckbereich aufspannen, der in der Zusammenbaulage eine Außenecke des Antriebsaggregates einfasst.

Wie oben erwähnt, ist die Anschraubbasis der Aggregatestütze in Schraubverbindung mit dem fahrzeugaufbauseitigen Aggregatelager. Hierzu kann die Anschraubbasis der Aggregatestütze mittels eines Schraubbolzens entlang einer Schraubachse A3 mit dem Aggregatelager (zum Beispiel dessen Lagerkern) verschraubt sein. Im Hinblick auf einen verwindungssteifen Verbund zwischen dem Antriebsaggregat und dem Fahrzeugaufbau ist es bevorzugt, wenn die Schraubachse A3 zwischen der Anschraubbasis der Aggregatestütze und dem Aggregatelager in Flucht ausgerichtet ist mit der ersten Schraubachse A1 oder der zweiten Schraubachse A2 zwischen dem Antriebsaggregat und der Aggregatestütze.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: in einer perspektivischen Darstellung einen Hilfsrahmen für einen Vorderwagen-Bereich eines Kraftfahrzeugs;
- Fig. 2: in einer vergrößerten perspektivischen Teilansicht eine Aggregatestütze zur verwindungssteifen Anbindung eines Antriebsaggregats am Hilfsrahmen; und
- Fig. 3: in einer Schnittdarstellung eine Schraubverbindungsstelle S1 zwischen dem Antriebsaggregat und einem Tragarm der Aggregatestütze.

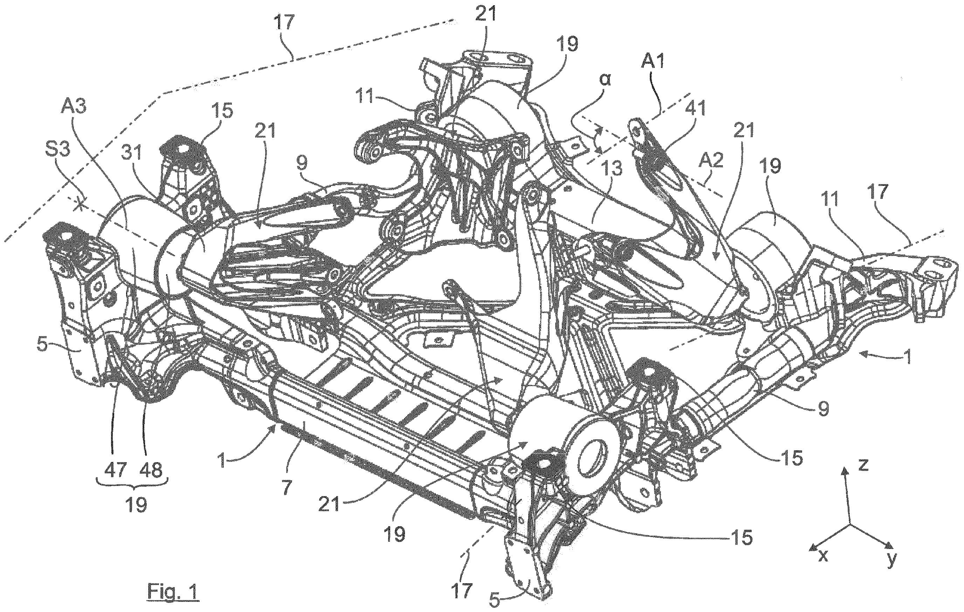

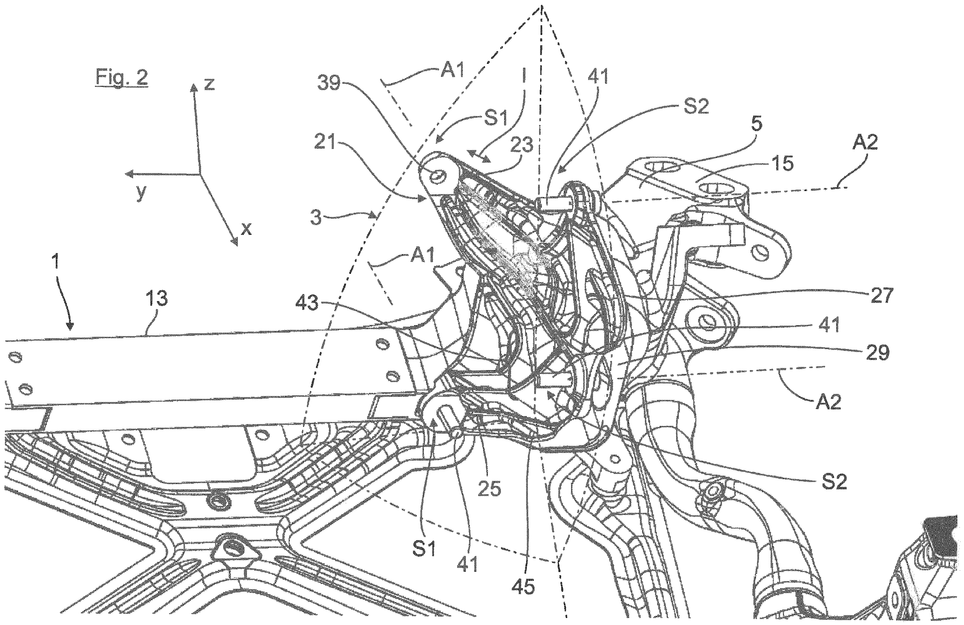

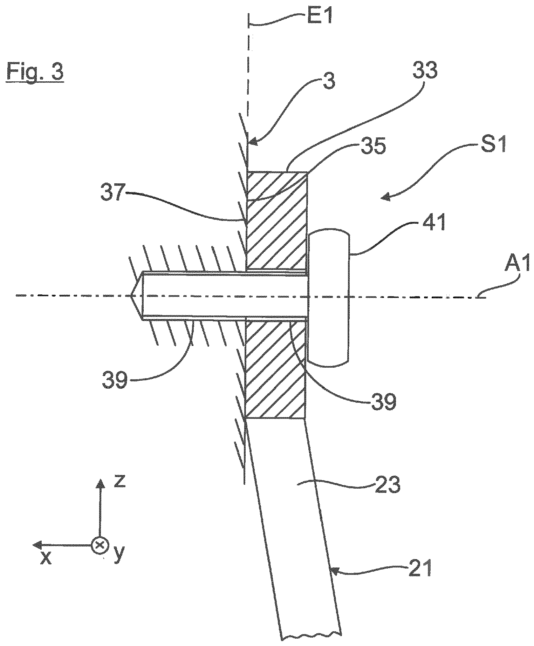

In der Fig. 1 ist in Alleinstellung ein Hilfsrahmen 1 gezeigt, auf dem ein hier nicht dargestelltes Antriebsaggregat 3 (Fig. 2 oder 3) abstützbar ist. Der Hilfsrahmen 1 weist in der Fig. 1 zwei vordere seitliche Gussknoten 5 auf, die über einen Hilfsrahmen-Querträger 7 miteinander verbunden sind. Die beiden vorderen Gussknoten 5 sind über seitliche Hilfsrahmen-Längsträger 9 in der Fahrzeuglängsrichtung x nach hinten verlängert, die an hinteren Gussknoten 11 mit einem hinteren Hilfsrahmen-Querträger 13 zusammenlaufen. Die beiden vorderen Gussknoten 5 des Hilfsrahmens 1 sind in der Zusammenbaulage an Schraubpunkten 15 mit nur strichpunktiert angedeuteten Karosserie-Längsträgern 17 befestigt. Wie aus der Fig. 1 weiter hervorgeht, sind an jedem der Gussknoten 5, 11 Aggregatelager 19 vorgesehen, die jeweils mit Aggregatestützen 21 verschraubt sind, wodurch sich das Antriebsaggregat 3, vorzugsweise eine Elektromaschine, unter Bildung einer Vierpunktlagerung auf dem Hilfsrahmen 1 abstützt.

Anhand der Fig. 1 bis 3 ist nachfolgend die Geometrie einer der Aggregatestützen 21 beschrieben: So weist die in der Fig. 2 gezeigte Aggregatestütze 21 insgesamt vier Tragarme 23, 25, 27, 29 auf, die materialeinheitlich und einstückig an einer sockelförmigen Anschraubbasis 31 zusammenlaufen. Die Anschraubbasis 31 der jeweiligen Aggregatestütze 21 ist mit den zugeordneten Aggregatelager 19 in einer Schraubverbindung S3 (Fig. 1).

Gemäß der Fig. 2 ragen die Tragarme 23 bis 29 über eine Hebelarmlänge von der Abstützbasis 31 ab und weisen an ihrem freien Ende jeweils einen Flanschabschnitt 33 (Fig. 1 oder 3) auf. Die Tragarme 23 bis 29 sind mittels zweier Schraubverbindungsstellen S1 und mittels zweier Schraubverbindungsstellen S2 mit dem Antriebsaggregat 3 verschraubt. Die Schraubverbindungsstellen S1 und S2 sind in unterschiedlichen Raumrichtungen zueinander ausgerichtet, wie es später noch beschrieben wird.

In der Fig. 3 ist die Schraubverbindungsstelle S1 zwischen dem Antriebsaggregat 3 und dem Tragarm 23 der Aggregatestütze 21 in einer vergrößerten Teilschnittansicht gezeigt. Demzufolge sind an der Schraubverbindungsstelle S1 der Flanschabschnitt 33 des Tragarms 23 und eine Anschlußkontur des Antriebsaggregats 3 an Planflächen 35, 37 miteinander in Anlageverbindung. Die Planflächen 35, 37 liegen in der Fig. 3 in einer Anbindungsebene E1. Zudem sind die beiden Planflächen 35, 37 mit Schraublöchern 39 durchsetzt, durch die ein Schraubbolzen 41 geführt ist, mittels dem die Aggregatestütze 21 mit dem Antriebsaggregat 3 entlang einer Schraubachse A1 verschraubt ist. Die Schraubachse A1 der Schraubverbindungsstelle S1 ist in der Fig. 2 und 3 in Flucht zur Fahrzeuglängsrichtung x ausgerichtet.

Die Tragarme 23 bis 29 der jeweiligen Aggregatestütze 21 spannen in der Fig. 2 einen (mittels einer Klammer hervorgehobenen) Inneneckbereich 43 auf, der eine korrespondierende Außenecke 45 des Antriebsaggregats 3 (in der Fig. 2 strichpunktiert angedeutet) einfasst. Hierfür sind die Schraubbolzen 41 der beiden Tragarme 23, 25 in der Fig. 2 entlang der ersten in der Fahrzeuglängsrichtung x ausgerichteten Schraubachsen A1 mit dem Antriebsaggregat 3 verschraubt, und zwar unter Bildung der ersten Schraubverbindungsstellen S1. Im Gegensatz dazu sind die Tragarme 27, 29 an den zweiten Schraubverbindungstellen S2 am Antriebsaggregat 3 verschraubt, und zwar mittels zweier Schraubbolzen 41, die entlang von zweiten Schraubachsen A2 ausgerichtet sind, die in Flucht zur Fahrzeugquerrichtung y liegen.

Die ersten und zweiten Schraubachsen A1, A2 sind somit zueinander orthogonal ausgerichtet. In gleicher Weise sind auch die Anbindungsebenen E1, E2 der unterschiedlich orientierten Schraubverbindungsstellen S1, S2 zueinander rechtwinklig ausgerichtet.

Aufgrund dieser speziellen Anbindungsgeometrie der Tragarme 23 bis 29 der jeweiligen Aggregatestütze 21 am Antriebsaggregat 3 ergibt sich ein besonders verwindungssteifer Verbund zwischen dem Antriebsaggregat 3 und der jeweiligen Aggregatestütze 21, wodurch die Aggregatestütze 21 im Vergleich zu bekannten Aggregatestützen weniger materialintensiv ausführbar ist, ohne dass deren Schwingungssteifigkeit beeinträchtigt ist.

In den Figuren sind die Aggregatelager 19 beispielhaft aus radial äußeren Lageraugen 47 aufgebaut, die an den jeweiligen Gussknoten 5, 11 angeformt sind. Radial innerhalb der Lageraugen 47 ist der Lagerkern mit zwischengeschaltetem Elastomerkörper angeordnet. Der Lagerkern ist an der Schraubverbindungsstelle S3 mittels eines nicht gezeigten Schraubbolzens entlang der Schraubachse A3 (Fig. 1) mit der Anschraubbasis 31 der Aggregatestütze 21 verschraubt. Im Hinblick auf eine weitere Steigerung der Schwingungssteifigkeit ist in den Figuren die Schraubachse S3 zwischen der Anschraubbasis 31 und dem jeweiligen vorderen Aggregatelager 19 in Flucht mit der Fahrzeugquerrichtung y ausgerichtet. Im Unterschied dazu sind die beiden hinteren Aggregatelager 19 mit ihren Schraubachsen A3 in Flucht zur Fahrzeuglängsrichtung y ausgerichtet.

## Patentansprüche

1. Fahrzeug mit einem Fahrzeugaufbau, einem Antriebsaggregat (3) und einer Aggregatelagerung für das Antriebsaggregat (3), mit zumindest einem am Fahrzeugaufbau (1) angeordneten Aggregatelager (19), das über zumindest eine Aggregatestütze (21) das Antriebsaggregat (3) trägt, wobei die Aggregatestütze (21) über zumindest eine erste Fügestelle (S1) und eine zweite Fügestelle (S2) am Antriebsaggregat (3) angebunden ist, wobei in der ersten Fügestelle (S1) die Aggregatestütze (21) mittels eines ersten Fügeelements (41) entlang einer ersten Fügeachse (A1) mit dem Antriebsaggregat (3) zusammengefügt ist, wobei in der zweiten Fügestelle (S2) die Aggregatestütze (21) mittels eines zweiten Fügeelements (41) entlang einer zweiten Fügeachse (A2) mit dem Antriebsaggregat (3) zusammengefügt ist, und dass die erste Fügeachse (A1) und die zweite Fügeachse (A2) zueinander um einen Achswinkel (α) zueinander rechtwinklig angeordnet sind, wobei in der ersten Fügestelle (S1) die erste Fügeachse (A1) des ersten Fügeelements (41) in Flucht zur Fahrzeuglängsrichtung (x) ausgerichtet ist, **dadurch gekennzeichnet, dass** in der zweiten Fügestelle (S2) die zweite Fügeachse (A2) des zweiten Fügeelements (41) in Flucht zur Fahrzeugquerrichtung (y) ausgerichtet ist.

2. Fahrzeug nach Anspruch 1, **dadurch gekennzeichnet, dass** die Aggregatestütze (21) insgesamt an vier Fügestellen (S1, S2) am Antriebsaggregat (3) angebunden ist, und dass in zwei Fügestellen (S1) die Fügeelemente (41) entlang der ersten Fügeachse (A1) ausgerichtet sind, und dass in den zwei anderen Fügestellen (S2) die Fügeelemente (41) entlang der zweiten Fügeachse (A2) ausgerichtet sind.

3. Fahrzeug nach einem der Ansprüche 1 oder 2, **dadurch gekennzeichnet, dass** an jeder Fügestelle (S1, S2) das Antriebsaggregat (3) und die Aggregatestütze (21) über Planflächen (35, 37) in Anlageverbindung sind, die in zumindest einer Anbindungsebene (E1, E2) liegen, die orthogonal zum Fügeelement (41) der jeweiligen Fügestelle (S1, S2) angeordnet ist.

4. Fahrzeug nach Anspruch 3, **dadurch gekennzeichnet, dass** die Anbindungsebene (E1) der ersten Fügestelle (S1) und die Anbindungsebene (E2) der zweiten Fügestelle (S2) zueinander rechtwinklig angeordnet sind.

5. Fahrzeug nach einem der vorhergehenden Ansprüche, **dadurch gekennzeichnet, dass** die Aggregatestütze (21) zumindest einen ersten Tragarm (23, 25) und zumindest einen zweiten Tragarm (27, 29) aufweist, die an einer lagerseitigen sockelförmigen Anschraubbasis (31), die mit dem Aggregatelager (19) verschraubbar ist, materialeinheitlich und einstückig zusammenlaufen und dass der erste Aggregatestützen-Tragarm (23, 25) über die erste Fügestelle (S1) am Antriebsaggregat (3) angebunden ist, und dass der zweite Aggregatestützen-Tragarm (27, 29) über die zweite Fügestelle (S2) am Antriebsaggregat (3) angebunden ist.

6. Fahrzeug nach Anspruch 5, **dadurch gekennzeichnet, dass** der erste und der zweite Tragarm (23, 25, 27, 29) der Aggregatestütze (21) einen Inneneckbereich (43) aufspannen, der eine Außenecke (45) des Antriebsaggregats (3) einfasst.

7. Fahrzeug nach einem der vorhergehenden Ansprüche, **dadurch gekennzeichnet, dass** die Aggregatestütze (21) in einer Schraubverbindung (S3) mit dem Aggregatelager (19) ist, bei der die Aggregatestütze (21) mittels eines Schraubbolzens entlang einer Schraubachse (A3) mit dem Aggregatelager (19) verschraubt ist, und dass die Schraubachse (A3) mit der ersten oder zweiten Fügeachse (A1, A2) in Flucht ausgerichtet ist.

8. Fahrzeug nach einem der vorhergehenden Ansprüche, **dadurch gekennzeichnet, dass** das Aggregatelager (19) ein aufbauseitiges Lagerauge (47) aufweist, in dem ein Lagerkern mit zwischengeschaltetem Elastomerkörper angeordnet ist, und dass der Lagerkern mit der Aggregatestütze (21) verschraubt ist.

## Claims

1. Vehicle with a vehicle body, a drive assembly (3) and an assembly mount for the drive assembly (3) having at least one assembly bearing (19) arranged on the vehicle body (1), which assembly bearing bears the drive assembly (3) via at least one assembly support (21), wherein the assembly support (21) is connected via at least one first joining location (S1) and a second joining location (S2) to the drive assembly (3), wherein in the first joining location (S1) the assembly support (21) is joined by means of a first joining element (41) along a first joining axis (A1) with the drive assembly (3), wherein in the second joining location (S2) the assembly support (21) is joined by means of a second joining element (41) along a second joining axis (A2) with the drive assembly (3), and that the first joining axis (A1) and the second joining axis (A2) are arranged to one another about an axis angle (a) at right angles to one another, wherein in the first joining position (S1) the first joining axis (A1) of the first joining element (41) is aligned in alignment with the vehicle longitudinal direction (x), **characterised in that** in the second joining position (S2) the second joining axis (A2) of the second joining element (41) is aligned in alignment with the vehicle transverse direction (y).

2. Vehicle according to claim 1, **characterised in that** the assembly support (21) is connected at a total of four joining positions (S1, S2) to the drive assembly (3), and that at two joining positions (S1) the joining elements (41) are aligned along the first joining axis (A1) and that at the two other joining positions (S2) the joining elements (41) are aligned along the second joining axis (A2).

3. Vehicle according to any of claims 1 or 2, **characterised in that** at each joining position (S1, S2) the drive assembly (3) and the assembly support (21) are in bearing connection via plane surfaces (35, 37) which lie in at least one connecting plane (E1, E2) which is aligned orthogonally to the joining element (41) of the respective joining position (S1, S2).

4. Vehicle according to claim 3, **characterised in that** the connecting plane (E1) of the first joining point (S1) and the connecting plane (E2) of the second joining point (S2) are arranged at right angles to one another.

5. Vehicle according to any of the preceding claims, **characterised in that** the assembly support (21) has at least one first carrying arm (23, 25) and at least one second carrying arm (27, 29) which converge materially-uniformly and in one piece on a support-side socket-shaped screw-on base (31), which can be screwed to the assembly bearing (19), and that the first assembly support carrying arm (23, 25) is connected via the first joining point (S1) to the drive assembly (3), and that the second assembly support carrying arm (27, 29) is connected via the second joining point (S2) to the drive assembly (3).

6. Vehicle according to claim 5, **characterised in that** the first and the second carrying arm (23, 25, 27, 29) of the assembly support (21) subtend an inner corner area (43) which borders an outer corner (45) of the drive assembly (3).

7. Vehicle according to any of the preceding claims, **characterised in that** the assembly support (21) is in a screw connection (S3) with the assembly bearing (19), in which the assembly support (21) is screwed by means of a screw bolt along a screw axis (A3) to the assembly bearing (19), and that the screw axis (A3) is aligned in alignment with the first or second joining axis (A1, A2).

8. Vehicle according to any of the preceding claims, **characterised in that** the assembly bearing (19) has a bearing lug (47) on the body side in which a bearing core is arranged with an interposed elastomer body, and that the bearing core is screwed to the assembly support (21).

## Revendications

1. Véhicule avec une carrosserie de véhicule, un groupe d'entraînement (3) et un logement de groupe destiné au groupe d'entraînement (3), avec au moins un palier de groupe (19) agencé au niveau de la carrosserie de véhicule (1) et qui supporte le groupe d'entraînement (3) par l'intermédiaire d'au moins un appui de groupe (21), dans lequel l'appui de groupe (21) est relié au groupe d'entraînement (3) par l'intermédiaire d'au moins un premier emplacement de jonction (S1) et un second emplacement de jonction (S2), dans lequel, au niveau du premier emplacement de jonction (S1), l'appui de groupe (21) est réuni au groupe d'entraînement (3) au moyen d'un premier élément de jonction (41) le long d'un premier axe de jonction (A1), dans lequel, au niveau du second emplacement de jonction (S2), l'appui de groupe (21) est réuni au groupe d'entraînement (3) au moyen d'un second élément de jonction (41) le long d'un second axe de jonction (A2), et en ce que le premier axe de jonction (A1) et le second axe de jonction (A2) sont agencés à angle droit l'un par rapport à l'autre avec un angle d'axe (α), dans lequel, au niveau du premier emplacement de jonction (S1), le premier axe de jonction (A1) du premier élément de jonction (41) est aligné avec la direction longitudinale de véhicule (x), **caractérisé en ce que**
au niveau du second emplacement de jonction (S2), le second axe de jonction (A2) du second élément de jonction (41) est aligné avec la direction transversale de véhicule (y).

2. Véhicule selon la revendication 1, **caractérisé en ce que** l'appui de groupe (21) est relié au groupe d'entraînement (3) au niveau de quatre emplacements de jonction (S1, S2), et **en ce que** les éléments de jonction (41) sont orientés le long du premier axe de jonction (A1) au niveau de deux emplacements de jonction (S1), et **en ce que** les éléments de jonction (41) sont orientés le long du second axe de jonction (A2) au niveau des deux autres emplacements de jonction (S2).

3. Véhicule selon la revendication 1 ou 2, **caractérisé en ce que**, au niveau de chaque emplacement de jonction (S1, S2), le groupe d'entraînement (3) et l'appui de groupe (21) sont en liaison nominale par l'intermédiaire de surfaces planes (35, 37) qui se situent dans au moins un plan de liaison (E1, E2) agencé orthogonalement par rapport à l'élément de jonction (41) de l'emplacement de jonction (S1, S2) respectif.

4. Véhicule selon la revendication 3, **caractérisé en ce que** le plan de liaison (E1) du premier emplacement de jonction (S1) et le plan de liaison (E2) du second emplacement de jonction (S2) sont agencés à angle droit l'un par rapport à l'autre.

5. Véhicule selon l'une quelconque des revendications précédentes, **caractérisé en ce que** l'appui de groupe (21) présente au moins un premier bras de support (23, 25) et au moins un second bras de support (27, 29) qui convergent, en demeurant d'un même matériau et d'une seule pièce, vers une base de boulonnage (31) en forme de socle côté palier pouvant être vissée au palier de groupe (19), et **en ce que** le premier bras de support d'appui de groupe (23, 25) est relié au groupe d'entraînement (3) par l'intermédiaire du premier emplacement de jonction (S1), et **en ce que** le second bras de support d'appui de groupe (27, 29) est relié au groupe d'entraînement (3) par l'intermédiaire du second emplacement de jonction (S2).

6. Véhicule selon la revendication 5, **caractérisé en ce que** les premier et second bras de support (23, 25, 27, 29) de l'appui de groupe (21) s'étendent sur une région de coin interne (43) qui comprend un coin externe (45) du groupe d'entraînement (3).

7. Véhicule selon l'une quelconque des revendications précédentes, **caractérisé en ce que** l'appui de groupe (21) se trouve en liaison par vis (S3) avec le palier de groupe (19), l'appui de groupe (21) étant vissé au palier de groupe (19) le long d'un axe de vissage (A3) au moyen d'une tige filetée, et **en ce que** l'axe de vissage (A3) est aligné avec le premier ou second axe de jonction (A1, A2).

8. Véhicule selon l'une quelconque des revendications précédentes, **caractérisé en ce que** le palier de groupe (19) présente côté carrosserie un œillet de palier (47) au sein duquel est agencé un noyau de palier avec un corps en élastomère intercalé, et **en ce que** le noyau de palier est vissé sur l'appui de groupe (21).
